# EUROPEAN PATENT APPLICATION

(11) **EP 2 218 577 A1**
(43) Date of publication of application: **18.08.2010**
(21) Application number: 09152932.1
(22) Date of filing: 16.02.2009
(51) Int. Cl.: B32B 5/04, B65D 81/38, B29D 7/01

(54) **Adaptive thermal insulation material**

(71) Applicant: Stichting Dutch Polymer Institute, 5612 AB Eindhoven (NL)
(72) Inventor: Van Oosten, Casper Laurens, 5611 NR Eindhoven (NL); Bastiaansen, Cornelis Wilhelmus Maria, 6065 EE Montfort (NL); Broer, Dirk J., 5663 SE Geldrop (NL)
(74) Representative: Renkema, Jaap

(57) **Abstract**

The present invention relates to adaptive thermal insulation materials, comprising a foil comprising a first substrate layer (1) and an anisotropic thermally responsive material (2) arranged thereon, wherein the anisotropic thermally responsive material comprises an anisotropic thermally responsive liquid crystalline polymer which is arranged such that a first part (i) of it is directly in contact with the first substrate layer (1). The present invention further relates to a method for manufacturing such materials and their use.

## Description

The invention relates to adaptive thermal insulation materials, a process for making such materials and its use.

Adaptive thermal insulation materials are known in the art. WO 99/05926 describes a construction which provides one level of thermal insulation while under one set of conditions and can automatically change to provide a different level of thermal insulation under a different set of conditions. The construction comprises two fabric layers that are separated by a spacer material. The spacer material is able to respond to a change of temperature. Examples of spacer material are trained shape memory alloys. The constructs are breathable and are used as garments, gloves, helmets and the like.

GB 2234705 also describes garments comprising two parallel layers of material to which are connected a plurality of fibers. The distance between the parallel layers can be changed, which induces a change of the insulation properties of the fabric.

GB 2312644 describes a thermally insulating textile which provides a variable degree of thermal insulation. The textile comprises a flexible substrate having a coating of a shape memory composition in a pattern.

All these documents describe garments and fabrics.

There is a need for adaptive thermal insulation materials for other applications like food, medical transplants or chemicals. In these applications the functionality of the packaged objects is very important, which functionality can be negatively influenced by a change of temperature, for example during transport.

The adaptive thermal insulation materials from the documents used before are not suitable for these applications. They are breathable, heavy weight and also too expensive for these types of applications.

Packaging of food, medical transplants and the like is currently performed by the use of thermal insulating packaging materials, materials having a very high specific heat (for example around a phase change of a material like the transition of ice to water) or by active cooling or usually a combination of the above. A drawback of conventionally used thermal insulating packaging materials is that they have an insulating function, even when this is not desired. For example, when a packaged product is placed again in a temperature controlled environment after transport, fast equilibration of the temperature of the inside and outside of the packaging is desirable to maintain the functionality of the packaged product.

It is an object of the present invention to provide an adaptive thermal insulation material suitable for packaging of food, beverages, medical transplants, chemicals and the like, which materials may be able to dynamically switch from thermally conductive to isolating when the surrounding temperature deviates from the desired temperature of the product. This feature may predominantly be needed when a product is transferred from one environment to another. If a packaged product is inside a temperature controlled environment, a good heat transfer may be desirable for fast equilibration of the temperature inside and outside the packaging and an insulating function is thus not desired under these conditions. If the packaged product leaves the temperature controlled environment, the insulating function may however be desired. It is thus desirable to have a responsive packaging material that changes insulating properties depending on the (surrounding) temperature.

This object is achieved by providing a foil comprising a first substrate layer (e.g. a polymeric layer) and an expanding layer comprising an anisotropic thermally responsive material, being arranged thereon such that a first part is directly attached to the first substrate layer.

It has been found that anisotropic thermally responsive liquid crystalline polymers, e.g. polymers obtained by in-situ polymerization of a liquid crystal monomer or a mixture of liquid crystal monomers in their ordered liquid crystalline state, are suitable anisotropic thermally responsive materials. The molecular alignment may be such that the polymer material obtains its thermally anisotropic properties (e.g. splay-bend alignment).

Liquid-crystalline molecules which can be used within the scope of the invention correspond to the general formula

A-B-M-(B)-(A)

In this formula, M represents a group whose chemical structure and rigid conformation cause the molecule to become highly anisotropic. Suitable M groups are disclosed, inter alia, in USP 4,398,803 and WO 95/24454. B represents a so-called spacer group. Dependent upon the desired properties, the monomers used comprise one or two spacer groups. Spacer groups are also known from the above-mentioned patent publications. A represents a reactive group of the above-mentioned type. The liquid-crystalline molecules may comprise one or more reactive groups. As stated above, a part of the liquid-crystalline molecules in the mixture may be non-reactive. In that case, these molecules do not comprise A-type groups.

A preferred embodiment of the oriented layer is **characterized in that** the polymerized material comprises liquid-crystalline molecules which are provided, at one end, with a non-polar group and, at the other end, with a polar group. The presence of this type of liquid-crystal molecules causes the liquid-crystalline material of the mixture to be polymerized to assume the homeotropic phase at a short distance from the substrate. As a result, the desired ordering of the tilt in the liquid-crystalline material of the retardation foil takes place almost spontaneously. Consequently, in this case treatments with electric fields to induce said tilt are redundant. This simplifies the manufacture of such layers.

Liquid crystalline molecules having a polar end and a non-polar end correspond to the general formula

R-B-M-Z

where B and M have the above-mentioned meaning. In this case, the spacer group B serves as the non-polar group of the molecule and Z represents a polar group, such as -CN, -OH, -NO₂, -COOH or -C(O)O-CH₃, but also phosphates, phosphonates and sulphonates are possible. R represents a further substituent which can reactive or non-reactive.

The mixture to be polymerized also comprises monomers having two or more reactive groups of the above-mentioned type. The presence of monomers having two or more polymerizable groups is important for making a three dimensional network after polymerization. During polymerization, the presence of such monomers leads to the formation of a three-dimensional network. This causes the optical properties of the inventive oriented layer or structure to become less sensitive to variations in temperature. In particular for layers which are employed at different temperatures, such a small temperature-dependence of the optical properties is very favorable.

The monomers comprising at least two polymerizable groups preferably comprise a liquid-crystalline group.

Alternatively monomers having one or more, preferably two or more polymerizable groups may be present that are absent of a liquid crystalline group. Their presence may be helpful for lowering viscosity of the coating composition, improvement of mechanical properties of the cured film, change of network crosslink density and the like.

Preferably the liquid crystal monomers C6M, C6BP, C6BPN, and mixtures thereof are used because of their large thermal response when the molecular alignment is such that the polymer material obtains its thermally anisotropic properties. A desired degree of thermal response may be obtained by for example varying the monomeric composition and/or ratios or by varying the degree of cross-linking.

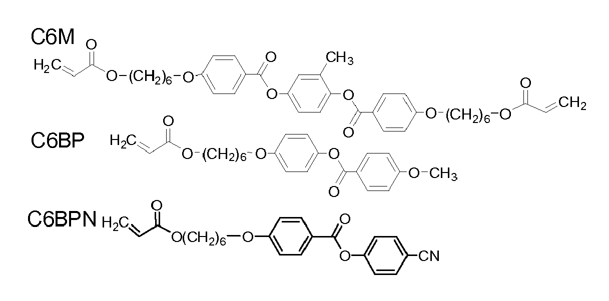

Suitable materials for the first substrate layer may be but are not limited to polyethylene, polypropylene, polycarbonate, polyethersulphone, polyvinyl chloride, polyvinyl acetate, polyvinyl alcohol, polyamides, polyolefines or cellulose, cellulose acetate, triacetate cellulose polystyrene and polymethyl methacrylate, In addition copolymers might be used used such as polystyrene/polybutadiene. Also composite layers may be used comprising a plurality of these polymer layers. For instance a trilayer consisting of polyethylene - polyvinyl alcohol- polyethylene where the polyvinyl alcohol provides a low oxygen transmission but is protected against water contacts by the polyethylene. Also combinations of these polymers with inorganic based materials in a multilayer configuration might be used such as aluminum layer evaporated on a polypropylene film, thus affecting heat transport and rejection even better.

A characteristic of the foils according to the present invention is that its insulation properties change with temperature. This effect is achieved by a change in thickness of the foil with temperature. The foil comprises an expanding layer that may be arranged as a 'hairy' structure on top of the first substrate layer (i.e. a single layer foil) that is able to reduce convection along the packaging. The expanding layer may also be arranged between the first and a second substrate layer (i.e. a double layer foil comprising for example a second polymeric layer). The expanding layer comprises liquid crystalline polymers with a gradient in molecular orientation across the thickness of the expanding layer which orientation is frozen in at a certain temperature To (e.g. the temperature at which the liquid crystal monomers are polymerized). The gradient in molecular orientation provides an anisotropic thermal expansion behavior of the liquid crystalline polymeric material. Therefore, at temperatures deviating from To residual stresses start to build up in the liquid crystal polymeric material. Due to the fact that only a part of the expansion layer is directly attached to the first substrate layer, the liquid crystalline polymer deforms (e.g. curls) which results in a change of the volume of stationary air at the surface of the single layer foil or between the first and second substrate layer of the double layer foil. In case of a single layer foil, the above described process is comparable to the standing up of hairs on the human body when it is cold ('goosebumps'). In case of a double layer foil, in which a second substrate layer is provided to shield the structures of anisotropic thermally responsive liquid crystalline polymer of the expanding layer, deformation of the expanding layer creates a difference in separating distance between the first and the second substrate layers, hence changing the volume of stationary air. In order to allow air-flow in and out of the space between the first and the second substrate layer, the second substrate layer needs to be porous. The porosity of the second substrate layer may be obtained for example by using a polymeric foil that in its nature is porous to air, by using a woven or non-woven fabric or by providing air vents in the second substrate layer.

The thermoresponsive packaging actively forms an insulating layer when the temperature moves away from the desired temperature (T₁), thus shielding the packaged contents from heat transfer with its surroundings being at temperature T₂. When the material is again brought into a controlled environment that has the desired temperature T₁, the insulating function is decreased and the packaging material will better transport heat. In this way, the package more easily equilibrates with its surroundings and the contents therefore are better preserved. To increase the equilibration speed the first and/or second substrate layers of the foil may be made of a heat conducting material, such as aluminum foil.

The thickness of a foil according to the present invention at the desired temperature T₁ is d₁ which actively changes to d₂ when the temperature reaches T₂. The desired temperature T₁ may be in a range from -50°C - 100°C, depending on the application. The temperature difference (ΔT = |T₂ - T₁|) in which a desired adaptation of the thickness of a foil according to the present invention is realized may be in the range from 1°C-50°C, preferably from 1°C-40°C, more preferably from 5°C-30°C, most preferably from 5°C-20°C. The ratio of the thickness of the foil in "insulating mode" and the thickness of the foil in "conducting mode" (i.e. d₂/d₁) may be in a range from 1.1-100, preferably from 1.5-10, more preferably from 2.5-5.0 and most preferably from 3.0-4.0. Foils according to the present invention may be obtained in a wide variety of thicknesses (d₁), for example in a range of 1µm-1000µm, preferably in a range of 2µm-500pm, more preferably in a range of 5µm-250µm, most preferably in a range of 10µm-100µm.

In summary, the expanding layer of thermally responsive liquid crystalline polymers has two functions: 1) upon responding to a temperature change it increases the volume of the stationary air and thereby reduces both convection and conduction; and 2) it reduces the direct surface contact with the surroundings of the contents.

Foils according to the present invention may be designed for packaging a contents of which the temperature needs to be preserved, for example a hot or a cold contents. The term "hot" in the context of the present invention means that the contents has an elevated temperature compared to its surroundings (e.g. a contents with a temperature of 37°C in an environment with a temperature of 20°C or a contents with a temperature of 20°C in a freezing cell, e.g. at -25°C, are considered hot contents). Vice versa cold objects have a temperature which is below the temperature of its surroundings. For a hot contents it is desired that the insulation properties of the packaging material increase with decreasing temperature, thus desiring that the thickness of the insulating foil increases with decreasing temperature. For a cold contents it is desired that the insulation properties of the packaging material increase with increasing temperature. Therefore, the desired thermal response of the insulating foil is that the thickness increases with increasing temperature.

An advantage of the adaptive thermal insulation materials according to the present invention is that liquid crystalline polymers under consideration may be stiff materials (modulus up to 3 GPa or even up to 100 GPa). Compared to responsive gels, the liquid crystalline polymer therefore has the potential to exert more force on the supporting layers such that the liquid crystalline polymer shows a larger thermal response (i.e. larger change in thickness). Moreover, the material is polymer based and therefore cheap to make. The response regime of the material can be easily tuned by changing the composition of the polymer, for example by using blends of liquid crystalline polymers or tuning the degree of crosslinking.

Another advantage of the adaptive thermal insulation materials according to the present invention is that the thermal response of the material is fully reversible, unlike some conventionally used thermally responsive materials, such as shape memory materials. Therefore, adaptive thermal insulation materials according to the present invention may show thermal response for more than one time, for example more than 10 times, possibly even during the full lifetime of the packaging material.

Yet another advantage of the adaptive thermal insulation materials according to the present invention is that compared to thermally responsive gels, the anisotropic thermally responsive liquid crystal polymer is completely immobilized in the foil, which limits the risk of contaminating the contents and makes it more suitable for packaging food.

There may be many more embodiments based on the present invention, for example: multilayer stacks of the double layer foil as described; a similar system but responding to radiation (e.g. light) rather than heat or a combination of both; a similar system but responding to the presence of water vapor rather than heat or a combination of both, localized insulation at patterned surfaces where only parts of the surface show responsive action. Rather than using liquid crystal polymer thermal responsive elements also bilayer structures can be used of materials with a different thermal expansion coefficient such as a polymer and an inorganic oxide, for instance polymethylmethacrylate and silicon oxide, which will also curl depending on the temperature. Eventually even bimetal layers might be used which are known to curl. They are often not preferred because of their thermal conductivity, a property which might be advantageously used in special applications.

It is another object of the present invention to provide a method for manufacturing adaptive thermal insulation materials according to the present invention. This object is achieved by the method according to claim 7 and is further explained in the appended examples. So far, it was extremely difficult to produce foils with thermally adaptive insulation properties, using conventional thermally responsive materials, such as shape memory materials. However, anisotropic thermally responsive liquid crystalline polymers can be easily patterned and processed using roll-to-roll processes.

Foils according to the present invention therefore offer a cost effective solution which can be widely used as insulating material, for example for packaging food, beverages, medical transplants and chemicals. Other applications may be in the areas of sports-equipment (e.g. sports clothing, for example ski jackets which insulate under stationary cold conditions but start to transmit heat from the body to the outside when the body heats up during exertion.), automotive industry (e.g. motor insulation, car interior insulation), housing.

The invention will now be explained in detail with reference to the appended Figures:
Fig. 1 shows a schematic representation of an embodiment of the present invention (A) at a temperature T₁, (B) at a temperature T₂ and (C) a top view.
Fig. 2 shows a schematic representation of an embodiment of the present invention (A) at a temperature T₁, (B) at a temperature T₂ and (C) a top view.
Fig. 3 shows a schematic representation of an embodiment of the present invention (A) at a temperature T₁, (B) at a temperature T₂ and (C) a top view.
Fig. 4 shows a schematic representation of the molecular orientation of the anisotropic thermally responsive liquid crystalline polymer in the embodiment shown in Fig. 1,(A) at T₂ and (B) at T₁ , with T₁>T₂.
Fig. 5 shows a schematic representation of the molecular orientation of the anisotropic thermally responsive liquid crystalline polymer in the embodiment shown in Fig. 1,(A) at T₁ and (B) at T₂ , with T₁<T₂.
Fig. 6 shows a SEM picture of the embodiment depicted in Fig. 1.
Fig. 7 shows the thermal response of the embodiment depicted in Fig. 1 (A) at 80°C, (B) at 110°C and (C) at 150°C.
Fig. 8 shows a schematic representation of a process for manufacturing thermally responsive insulating foils according to the present invention.
Fig. 9 shows the thermal response of a strip of a poly(C3M) film according to example 1.

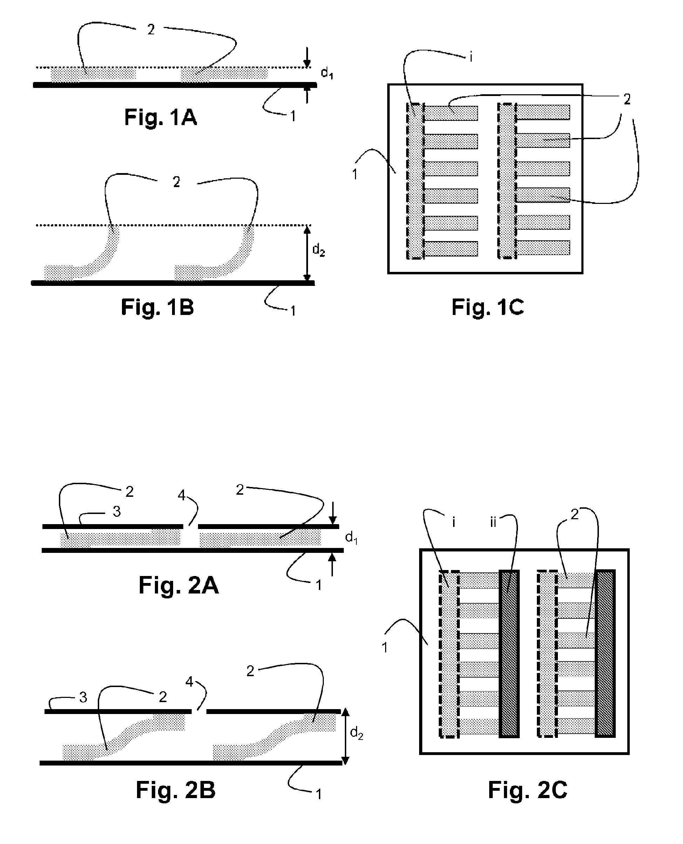

Fig. 1 shows a schematic representation of a thermally responsive single layer foil according to the present invention. The foil comprises a first substrate layer (1) which comprises a polymeric foil comprising a previously mentioned polymeric material (e.g. polypropylene or triacetate cellulose) or a thermally conducting material, such as aluminum foil. The thermally responsive foil further comprises an anisotropic thermally responsive liquid crystalline polymer (2) which is arranged such that a part of it is directly attached to the first substrate layer (i, Fig. 1 C). The remaining part of the anisotropic liquid crystalline responsive polymer is freely moveable in a direction substantially perpendicular to the first substrate layer. At a temperature T₁ the anisotropic thermally responsive liquid crystalline polymeric material is arranged as indicated in Fig. 1A. The thickness of the thermally responsive foil at T₁ is d₁. Fig. 1B depicts the same structure at a temperature T₂. Due to the anisotropic properties of the liquid crystalline polymer, the freely moveable part of the liquid crystalline polymeric material bends upwards, such that the thickness of the foil becomes d₂ at T₂. The standing 'hairs' prevent convection near the surface of the foil, therefore the insulating properties at T₂ are increased with respect to T₁.

Fig. 2 shows a schematic representation of a thermally responsive double layer foil according to the present invention. Besides the first substrate layer (1) and the anisotropic thermally responsive liquid crystalline polymer (2), the foil comprises a second substrate layer (3) of a second previously mentioned polymeric material (e.g. polyethylene or triacetate cellulose) or a thermally conducting material such as aluminum foil. The material of the second substrate layer may be, but does not have to be the same as the material of the first substrate layer. The anisotropic thermally responsive liquid crystalline polymer (2) is arranged such that a first part of it is directly attached to the first substrate layer (i) and such that a second part of it is directly attached to the second substrate layer (ii, Fig. 2C). The second substrate layer comprises vents (4) to allow air in and out the space between the first substrate layer and second substrate layer. Upon a temperature change from T₁ (Fig. 2A) to T₂ (Fig. 2B), the anisotropic thermally responsive liquid crystalline polymer (2) bends and exerts a force on the second substrate layer which causes the second substrate layer to be lifted. The distance between the first substrate layer and the second substrate layer increases (d₂>d₁) upon a temperature change from T₁ to T₂ and air is sucked in through vents (4) in the second substrate layer. The increased volume of stationary air between the second substrate layer and the first substrate layer is responsible for the increased insulating properties at T₂ with respect to T₁.

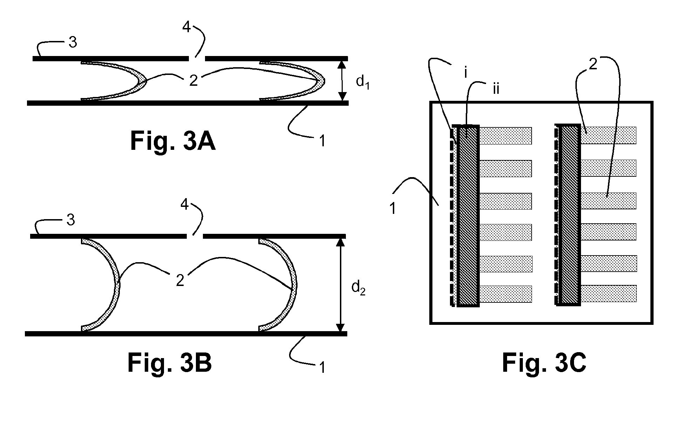

Fig. 3 shows a schematic representation of a thermally responsive double layer foil according to the present invention, in which the thermally anisotropic thermally responsive liquid crystalline polymer (2) is arranged such that a first part (i) of it is directly attached to the first substrate layer (1 ) and such that a second part (ii) of it is directly attached to the second substrate layer (3). Parts (i) and (ii) are located substantially directly above each other (Fig. 3C), such that thermally anisotropic thermally responsive liquid crystalline polymer (2) is arranged in spring-like structures (Figs. 3A and 3B). The second substrate layer again comprises vents (4) to allow air in and out the space between the second substrate and first substrate layers. Upon a temperature change from T₁ (Fig. 3A) to T₂ (Fig. 3B), the anisotropic thermally responsive liquid crystalline polymer (2) stretches and exerts a force on the second substrate layer which causes the second substrate layer to be lifted. The distance between the first substrate layer and the second substrate layer increases (d₂>d₁) upon a temperature change from T₁ to T₂ and air is sucked in through vents (4) in the second substrate layer. The increased volume of stationary air between the first substrate layer and the second substrate layer is responsible for the increased insulating properties at T₂ with respect to T₁.

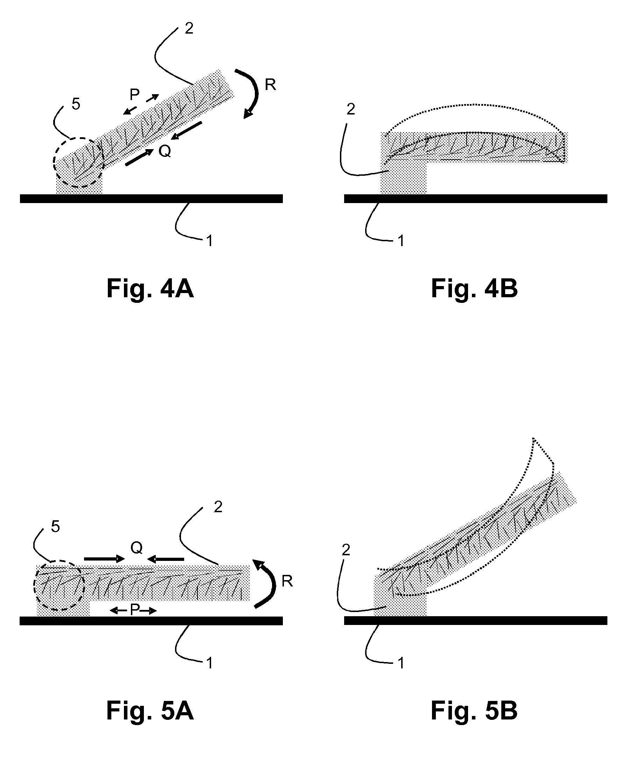

Fig. 4. shows a schematic representation of the molecular orientation of the anisotropic thermally responsive liquid crystalline polymer in the embodiment shown in Fig. 1,(A) at T₂ and (B) at T₁ , with T₁>T₂. The lines filling the shape 2 are an indication of the average direction of the long axes of the ordered liquid crystal entities embedded in the polymer network. Over the cross-section of the film (shape 2) the average direction changes from planar to perpendicular. Alternatively the average direction might rotate while remaining planar. Fig. 4A shows a standing 'hair' at lower temperature T₂. Upon heating to T₁, the anisotropic thermally responsive material tends to contract at one side of the freely moveable part of the liquid crystalline polymeric structure (indicated with the arrows near Q). Here, the liquid crystalline polymer molecules are arranged in a direction substantially parallel to the direction in which the 'hair' extends (near Q in Fig. 4A). At the same time, at the opposite side of the freely moveable part of the liquid crystalline polymeric structure, the anisotropic thermally responsive material tends to stretch (indicated with the arrows near P). Here, the liquid crystalline polymer molecules are arranged in a direction substantially perpendicular to the direction in which the 'hair' extends (near P in Fig. 4A). As a result, a residual stress in the freely moveable part of the liquid crystalline polymeric structure will cause the 'hair' to bend as indicated with arrow R to the position shown in Fig. 4B, which is the position at elevated temperature T₁. Actually, due to residual stresses at elevated temperature T₁, the shape of the lying hair may be as indicated with the dotted curved lines in Fig. 4B. If, however, the liquid crystal material is only present (or the liquid crystal material is only anisotropic thermally responsive) in a region near the point of attachment to the substrate (i.e. region 5 in Fig. 4A), this region (5) may act as a hinge upon heating. The shape of the lying hair at elevated temperature may then be as represented in Fig. 4B. A foil according to this embodiment is suitable as a packaging material for a hot contents, because the insulating properties of the foil increase with decreasing temperature.

Fig. 5 shows a schematic representation of the molecular orientation of the anisotropic thermally responsive liquid crystalline polymer in the embodiment shown in Fig. 1,(A) at T₁ and (B) at T₂ , with T₁<T_{2.} Fig. 5A shows a lying 'hair' at lower temperature T₁. Upon heating to T₂, the anisotropic thermally responsive material tends to contract at one side of the freely moveable part of the liquid crystalline polymeric structure (indicated with the arrows near Q). Here, the liquid crystalline polymer molecules are arranged in a direction substantially parallel to the direction in which the 'hair' extends (near Q in Fig. 5A). At the same time, at the opposite side of the freely moveable part of the liquid crystalline polymeric structure, the anisotropic thermally responsive material tends to stretch (indicated with the arrows near P). Here, the liquid crystalline polymer molecules are arranged in a direction substantially perpendicular to the direction in which the 'hair' extends (near P in Fig. 5A). As a result, a residual stress in the freely moveable part of the liquid crystalline polymeric structure will cause the 'hair' to bend as indicated with arrow R to the position shown in Fig. 5B, which is the position at elevated temperature T₂. Actually, due to residual stresses at elevated temperature T₂, the shape of the standing hair may be as indicated with the dotted lines in Fig. 5B (see also Fig. 1 B). If, however, the liquid crystal material is only present (or the liquid crystal material is only anisotropic thermally responsive) in a region near the point of attachment to the substrate (i.e. region 5 in Fig. 5A), this region (5) may act as a hinge upon heating. The shape of the standing hair may be as represented in Fig. 5B. A foil according to this embodiment is suitable as a packaging material for a cold contents, because the insulating properties of the foil increase with increasing temperature.

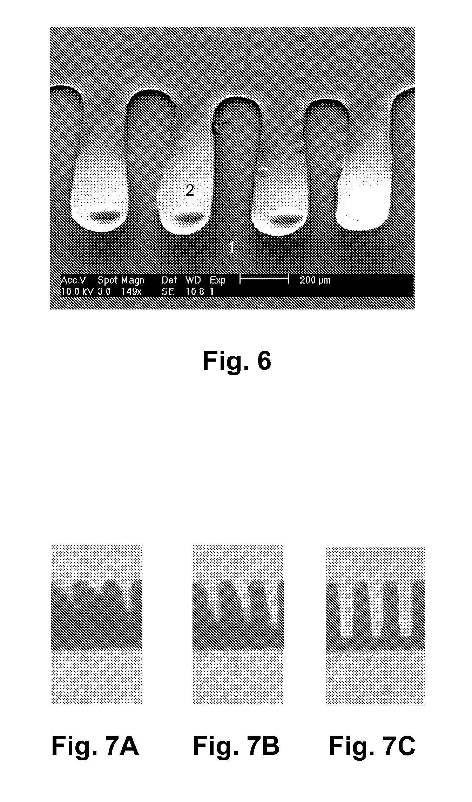

Fig. 6 shows a SEM picture of the embodiment depicted in Fig. 1. The first substrate layer (1) and the freely moveable parts of the anisotropic thermally responsive liquid crystalline polymeric structures (2) can be clearly identified. It can also be seen that the freely moveable parts are approximately 100-200 µm wide and 400-500 µm long. It should be noted that the size of the structures are dependent on the manufacturing process, so different sizes are also possible.

Fig. 7 shows the thermal response of the embodiment depicted in Fig. 1 (A) at 80°C, (B) at 110°C and (C) at 150°C. Fig. 7 shows that upon heating from 80°C to 150°C, the 'hairs' move from a standing position as shown in Fig. 4A to a lying position as shown in Fig. 4B. In the standing position the structure is somewhat out of focus from the microscope and is therefore unsharp. When it is brought to the lying position it is fully in focus and sharp.

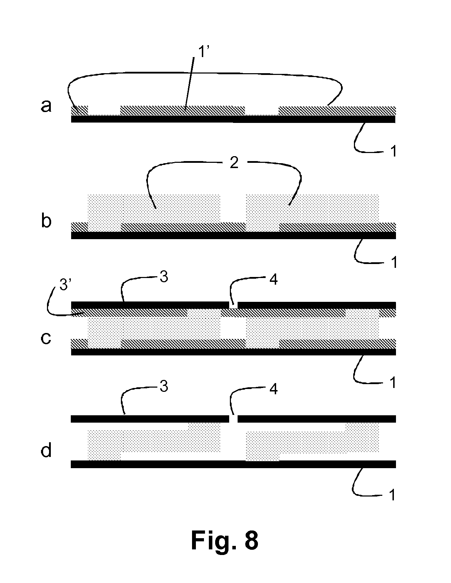

Fig. 8 shows a schematic representation of a process for manufacturing thermally responsive insulating foils according to the present invention. The process comprises the steps of:
a. patterning a first substrate layer (1) with a first release layer (1');
b. depositing the anisotropic thermally responsive material (2) such that a first part (i) of the anisotropic thermally responsive material (2) is directly in contact with the first substrate layer (1);
c. providing a second substrate substrate layer (3) with vents (4), patterned with a second release layer (3') and polymerizing the anisotropic thermally responsive material (2);
d. removing the first and the second release layers (1' and 3').

The release layers may comprise a sacrificial layer or a non-sticking layer, e.g. polyvinyl alcohol which can be easily removed later by dissolving it in water. Polyvinyl alcohol has another advantage such that it nicely controls the orientation of the liquid crystal molecules prior to their polymerization. Alternatively also other materials can be used such as polyvinyl pyrrolidone (water soluble), aluminum (soluble in either a basic solution or an acidic solution) or a thin layer of fluorinated polyimide (non-sticking). This process is suitable to manufacture double layer foils according to the present invention (e.g. the embodiments shown in Figs. 2 and 3). For manufacturing a single layer foil, step c reduces to polymerizing the anisotropic thermally responsive material. In Examples 2 and 3 a more detailed description of manufacturing processes for foils according to the present invention is given.

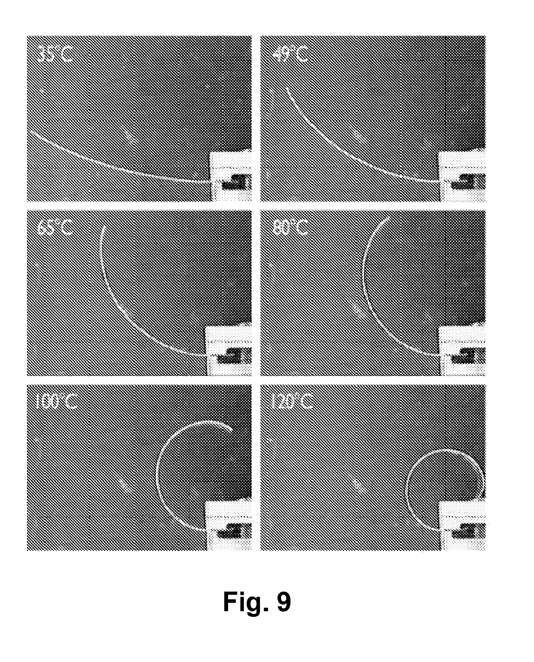

Fig. 9 shows the thermal response of a strip of a poly(C3M) film, according to Example 1. It shows that the strip is slightly curved at 35°C and completely curled at 120°C. This thermal response corresponds to the response shown in Fig. 5.

### Example 1

A macroscopic strip is produced to show the bending response to temperature of a polymer with a splayed molecular organization. Two glass substrates were prepares, one with polyimide AL3046 from JSR, Japan, and one with PI1211 from Nissan Chemicals. Only the first substrate was rubbed, and then a cell was constructed by gluing the substrates together with glue with spacer particles (thickness 40 um). The cell was filled at 120°C with the monomer C3M (see below) mixed with 1 wt% of photoinitiator (Irgacure 819). The system was allowed to cool to 90°C and then photopolymerized.

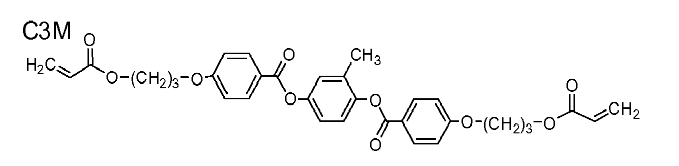

After removing the top substrate, the polymer film was cut to a strip. The strip was clamped to study the bending behavior macroscopically. The thermal response of the strip is shown in Fig. 9.

### Example 2

Manufacturing of a hairy elements from liquid crystal networks, with low insulation at high temperatures.

A substrate comprising glass was patterned with a sacrificial layer by first creating a negative image of the sacrificial layer pattern with a lift-off photo-resist of MicroResist Ma-N 490 (Microresist Technology GmbH) which has a thickness of at least 3 µm but preferably 5 µm or more. Secondly the sacrificial layer of polyvinyl alcohol with a thickness of about 1 µm was added by spincoating from an aqueous solution and the water was evaporated. Finally, the lift-off resist was dissolved in a solvent that poorly dissolves the polyvinyl alcohol, such as acetone, so that only the sacrificial layer pattern on the substrate remains. This completes step a shown in Fig. 8.

Then the anisotropic thermally responsive liquid crystal polymer was deposited by first coating the substrate with an alignment layer of polyimide, grade 3046 (JSR Chemicals) with a thickness of about 100 nm. The alignment layer was mechanically rubbed with a velvet cloth such that the liquid crystal composition is able to obtain the desired molecular alignment with respect to the substrate normal. The patterned of part of the responsive polymer (the hairy structure) was then added by inkjet printing of a liquid composition containing reactive liquid crystalline monomers C6M (35 wt%), C6BP (50 wt%) and C6BPN (15 wt%) and Irgacure 819 (a Ciba photoinitiatior). The inkjetted drops were spaced in such a way that a continuous structure is obtained. By decreasing the spacing of the inkjet drops, the thickness of the printed layer can be increased. The monomeric material was polymerized in the nematic phase of the monomeric liquid crystal material using a photopolymerization at elevated temperatures, here 60 °C. This completes step b show in Fig. 8. A schematic representation of the molecular orientation of the anisotropic thermally responsive liquid crystalline polymer is shown in Fig. 4.

As a final step (step d shown in Fig. 8), the sacrificial layer was dissolved, thereby freestanding 'hairs' were created. The resulting foil and its thermal response are shown in Figs. 6 and 7 respectively.

### Example 3

Manufacturing of a hairy elements from liquid crystal networks, with high insulation at high temperatures.

The reactive composition used in this example comprised the monomeric reactive liquid crystalline monomers C6M (35 wt%), C6BP (50 wt%) and C6BPN (15 wt%). A small amount (0.5 wt%) of surfactant PS16 was added to obtain planar alignment at the surface. 0.5 wt% Irgacure 819 was added as a photoinitiator for the photopolymerization of the system. An inhibitor (0.3 wt%, benzoquinone) was added to the system to improve the contrast of photopatterning.

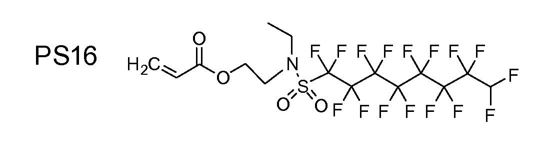

Starting with a substrate with a sacrificial layer (see Example 2) treated with a lightly buffed polyimide layer (Nissan Chemical, grade 5300), the above described reactive composition was spincoated from a 1:1 solution in dicholoromethane on the substrate. At 50 °C, the solvent was evaporated and the monomeric liquid crystals self-assembled into a splayed-nematic organization. The monomeric layer was then photopolymerized through a mask defining the desired polymeric structure, whereby the illuminated areas crosslinked. This was followed by a development step in acetone, whereby the non-exposed areas are washed away in the acetone. To remove any residue, the sample was then rinsed with ethanol. Finally, the polyvinylalcohol sacrificial layer was dissolved in water, creating free-standing flaps. A schematic representation of the molecular orientation of the anisotropic thermally responsive liquid crystalline polymer is shown in Fig. 5

## Claims

1. A foil comprising a first substrate layer (1) and an anisotropic thermally responsive material (2) arranged thereon, wherein the anisotropic thermally responsive material comprises an anisotropic thermally responsive polymer which is arranged such that a first part (i) of it is directly attached to the first substrate layer (1).

2. The foil according claim 1, comprising a second substrate layer (3) shielding the anisotropic thermally responsive material, wherein the second substrate layer is porous and arranged such that a second part (ii) of the anisotropic thermally responsive liquid crystalline polymer is directly attached to the second substrate layer (3).

3. The foil according to any one of the claims 1-2, wherein the anisotropic thermally responsive polymer comprises an anisotropic thermally responsive liquid crystalline polymer.

4. The foil according to claim 3, wherein the anisotropic thermally responsive liquid crystalline polymer is formed by polymerization of at least one liquid crystal monomer selected from the group consisting of:

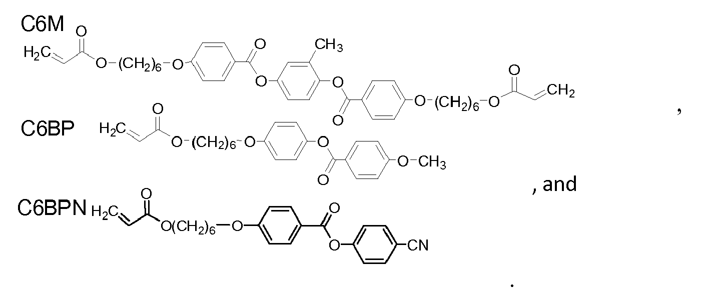

5. The foil according to any one of the claims 1-4, wherein the first substrate layer and/or the second substrate layer comprise at least one thermoplastic polymer.

6. The foil according to claim 5, wherein the at least one thermoplastic polymers for the first substrate layer and the second substrate layer are independently selected from the group consisting of polyethylene, polypropylene, polycarbonate, polyethersulphone, polyvinyl chloride, polyvinyl acetate, polyvinyl alcohol, polyamides, polyolefines, cellulose, cellulose acetate, triacetate cellulose, polystyrene, polymethyl methacrylate and copolymers of polystyrene/polybutadiene,

7. The foil according to any one of the claims 1-4, wherein the first substrate layer and/or second substrate layer comprise a heat conducting material.

8. The foil according to any one of the claims 1-7, wherein the foil has a first thickness d₁ at a first temperature T₁ and a second thickness d₂ at a second temperature T₂, and wherein d₂/d₁ lies in a range from 1.5-10.

9. The foil according to claim 8, wherein |T₂-T₁| lies in a range from 1°C-50°C.

10. A method for manufacturing a foil according to claim 1 comprising the steps of:
- patterning a first polymeric layer (1) with a first release layer (1');
- depositing the anisotropic thermally responsive material (2) such that a first part (i) of the anisotropic thermally responsive material (2) is directly in contact with the first polymeric layer (1);
- polymerizing the anisotropic thermally responsive material (2);
- removing the first release layer (1').

11. The method according to claim 10, wherein prior to polymerizing the anisotropic thermally responsive material (2) a porous second polymeric layer (3) is patterned with a second release layer (3') and mounted on top of the anisotropic thermally responsive material (2) such that a second part (ii) of the anisotropic thermally responsive material (2) is directly in contact with the porous second polymeric layer (3), the second release layer (3') is removed together with the first release layer.

12. The method according to any one of the claims 10-11, wherein the first release layer (1') and the second release layer (3') comprise a sacrificial layer or a non-sticking layer.

13. Use of a foil according foil according to claims 1-9 as a packaging material for foods, beverages, medical transplants or chemicals.

14. Use of a foil according to claim 1-9 as adaptive thermally insulating material in sports-equipment.

15. Use of a foil according to any one of the claims 1-9 as adaptive thermally insulating material in automotive applications.
